# EUROPEAN PATENT APPLICATION

(11) **EP 1 857 896 A1**
(43) Date of publication of application: **21.11.2007**
(21) Application number: 06425332.1
(22) Date of filing: 16.05.2006
(51) Int. Cl.: G05B 17/02

(54) **Emulator of a controller of an industrial plant**

(71) Applicant: ANSALDO ENERGIA S.P.A., 16152 Genova (IT)
(72) Inventor: Flamingo, Flavio, 16142 Genova (IT)
(74) Representative: Jorio, Paolo

(57) **Abstract**

An emulator of a generating plant controller includes: an emulation unit (2), comprising an emulation engine (15); a structural configuration unit (3), for configuring the emulation engine (15) so as to define an architecture of a controller (50) of a generating plant (55), the architecture comprising a plurality of operating modules (M) organised in nodes (N) and at least one loop (L); a functional configuration unit (5) for configuring the emulation engine (15) by means of sets of instructions (I) directly uploadable to the controller (50) and assigned to respective operating modules (M), so as to define controlling functions of the plant (55). At least one operating module (M) defined in the emulation engine (15) comprises an interpreter (23) for performing the instruction assigned to the operating module (M).

## Description

The present invention relates to an emulator of a controller of an industrial plant, in particular of an electric energy generating plant.

As known, the design and maintenance of control systems of industrial plants require considerable investment of resources, due to their complexity. Simulators of real control systems are frequently made to perform danger-free development, upgrade, and correct operation tests, as well as to train operating personnel. A simulator is an essentially identical replica, both from a physical point of view (hardware) and a functional point of view, of the control system to be installed or already installed in a plant. The simulator is however installed in a laboratory and connected to a further plant simulator. In practice, the same physical structure and the same functionalities of the real control system are reproduced in the simulator, possibly without the redundancies which generally ensure temporary operation also in case of partial failures. Therefore, the simulator comprises a certain number of modules, normally organised in nodes and loops, and a set of instructions, which define the functions embodied by each module and the interconnections thereof.

Therefore, the cost of a simulator is extremely high, indeed because the real control system is physically replicated. Furthermore, it must be considered that the configuration of a control system is nearly always modified after installation and in many cases changes are made by independent work groups. Before being able to make a simulator, a step in which the already operating real control system is studied is consequently required, with considerable effects on the already high costs.

It is an object of the present invention to make an emulator of an industrial plant controller, which allows to overcome the described limitations.

According to the present invention, an emulator of a controller of an industrial plant is provided as claimed in claim 1.

The present invention will now be described with reference to the accompanying drawings illustrating some non-limitative embodiment examples thereof, in which:
- figure 1 is a simplified block diagram of an emulator of a controller of a generating plant according to a first embodiment of the present invention, cooperating with a controller, an industrial plant and a simulator of the plant;
- figure 2 is a more detailed block diagram of the emulator of figure 1;
- figure 3a shows an address format used by the emulator of figure 1;
- figure 3b shows an instruction format used by the emulator of figure 1;
- figures 4a and 4b are detailed block diagrams of respective parts of the emulator of figure 1;
- figure 5 is a block diagram which shows the emulator of figure 1 implemented by means of a plurality of networked electronic computers;
- figure 6 shows a table used by the emulator of figure 1;
- figure 7 is a block diagram showing a first operating mode of the emulator of figure 1, in which the emulator is connected to the controller and to the plant of figure 1;
- figure 8 is a block diagram showing a second operating mode of the emulator of figure 1, in which the emulator is connected to the simulator of figure 1;
- figure 9 is a simplified block diagram of an emulator of a controller of an industrial plant according to a second embodiment of the present invention, cooperating with a controller, an electric energy generating plant and a simulator of the plant;
- figure 10 is a more detailed block diagram of the emulator in figure 9.

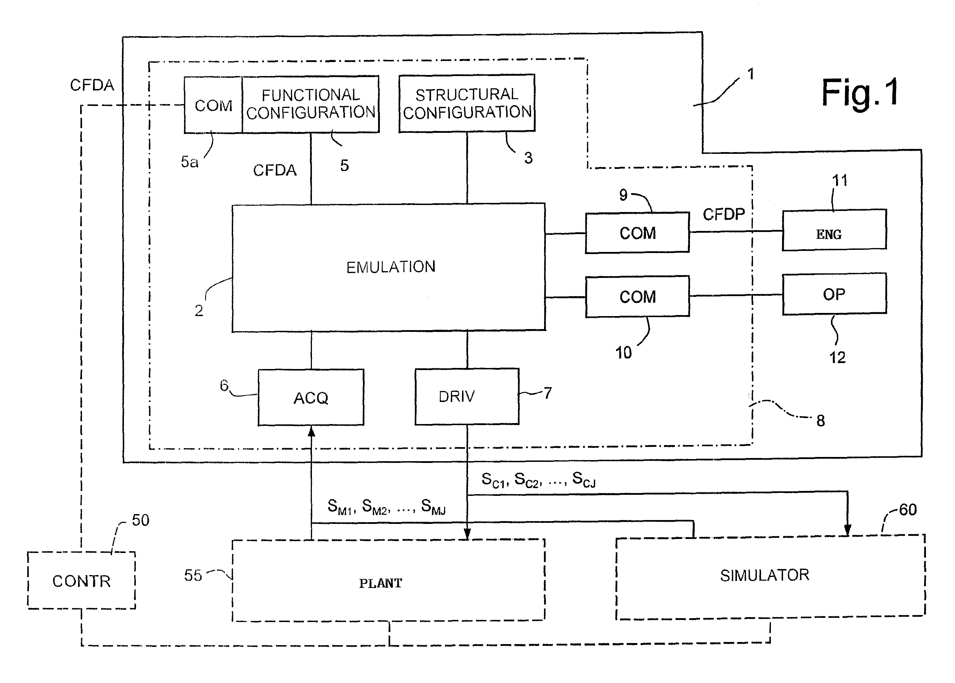

In figure 1, reference number 1 indicates as a whole an emulator of a controller 50 of a plant 55, in particular of an electric energy generating plant, of the known type (shown by a dashed line). However, the described example must not be considered limitative, because the invention may advantageously be exploited for different kinds of industrial plants.

Emulator 1 comprises an emulation unit 2, a structural configuration unit 3, and a functional configuration unit 5, which can be connected to exchange data with controller 50 of electric energy generating plant 55. Furthermore, emulator 1 is provided with an acquisition unit 6, a driving unit 7, as well as communication ports 9, 10 for the two-way connection to an engineering station 11 and an operator station 12. In the described embodiment, emulation unit 2, structural configuration unit 3, functional configuration unit 5, acquisition unit 6, driving unit 7 and communication ports 9, 10 reside in a single electronic computer 8 (shown with a dash-and-dotted line). Alternatively, emulator 1 may comprise several networked computers (e.g. if the controller to be emulated is complex and requires a high processing power).

Emulation unit 2 can be configured through structural configuration unit 3 and functional configuration unit 5, as explained in further detail below. In particular, structural configuration unit 3 allows to define a virtual copy of the physical structure or architecture of controller 50, while functional configuration unit 5 reproduces the functional features. For this purpose, functional configuration unit 5 is provided with a communication port 5a, which must be connected to controller 50 to fetch the current CFDA configuration data (i.e. a set of instructions I of the type further described below, used by controller 5) and transfer them to emulation unit 2.

Acquisition unit 6 and driving unit 7 are connectable to plant 55 controlled by controller 50 to be emulated (or alternatively, to a simulator 60 of the plant 55 itself). In particular, acquisition unit 6 receives a set of measured signals S_{M1}, ..., S_{IM}, generated by sensors of plant 55 (or by simulator 60) and representative of respective controlled variables. The measured signals S_{M1}, ..., S_{MJ} are received, pre-processed if required and sent to emulation unit 2. For example, the measured signals S_{M1}, ..., S_{MJ} may also be either digital or analogue. In the latter case, acquisition unit 6 provides the analogue/digital conversion.

Driving unit 7 provides a set of control signals S_{C1'} ..., S_{CK}, produced by emulation unit 2 and representative of respective control variables. Also control signals S_{c1}, ..., S_{CK} may be either digital or analogue, according to the needs (in the latter case, driving unit 7 also performs the digital/analogue conversion). In particular, control signals S_{C1'} ..., S_{CK} are made available in a format directly usable by actuators (not shown) of plant 55.

Through communication ports 9, 10, a two-way connection is established between emulation unit 2, engineering station 11 and operator station 12, to allow power station supervisor technicians and operators to interact with emulator 1. In the embodiment described here, engineering station 11 and operator station 12 are further electronic computers different from the electronic computer 8 where emulator 1 resides.

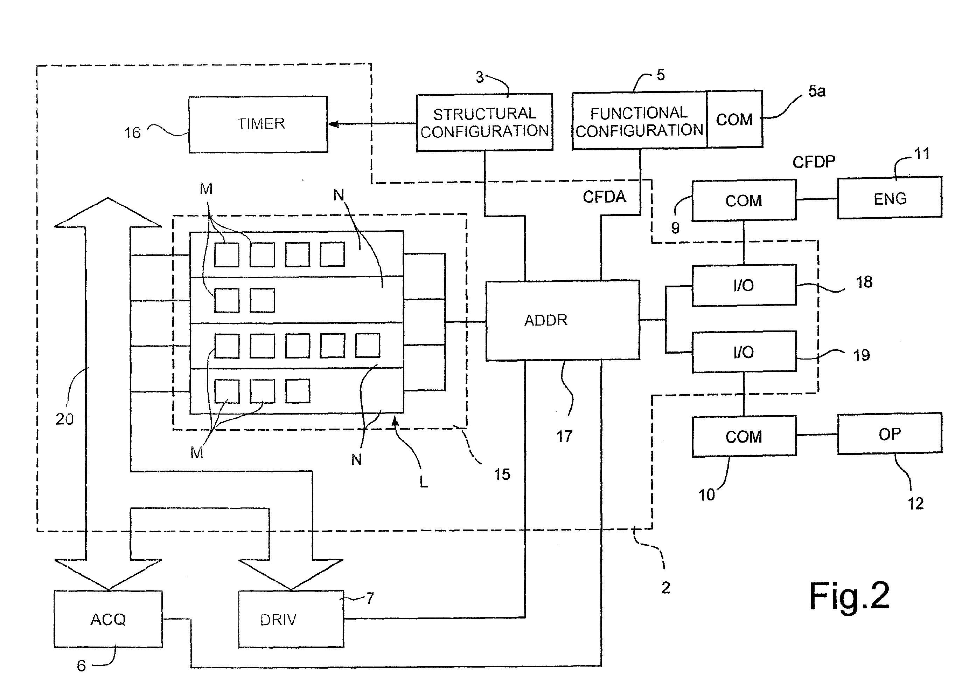

With reference to figure 2, emulation unit 2 comprises an emulation engine 15, a programmable timer device 16 (for example of the "real time controller" or "watch dog timer" type), an addressing device or router 17 and at least two input/output modules or I/O modules 18, 19, each of which controls a respective communication port 9, 10. Emulation unit 2 is also configured to perform in real time the control operations envisaged for the controller 50 to be emulated. In practice, structural configuration unit 3 also allows to set a value of cycle time T_{C} (equal to the cycle time of controller 50) on timer device 16. Then, timer device 16 controls the execution speed of operations so that the response of emulation unit 2 complies with the set cycle time T_{C}.

Communication between the various parts of emulator 1 is managed by addressing device 17. However, a data bus 20 directly connects emulation engine 15 to acquisition unit 6 and driving unit 7. In this way, measured signals S_{I1}, ..., S_{IM} and critical control signals S_{C1}, ..., S_{CK}, which require particularly rapid processing, may be directly exchanged without the intervention of addressing device 17.

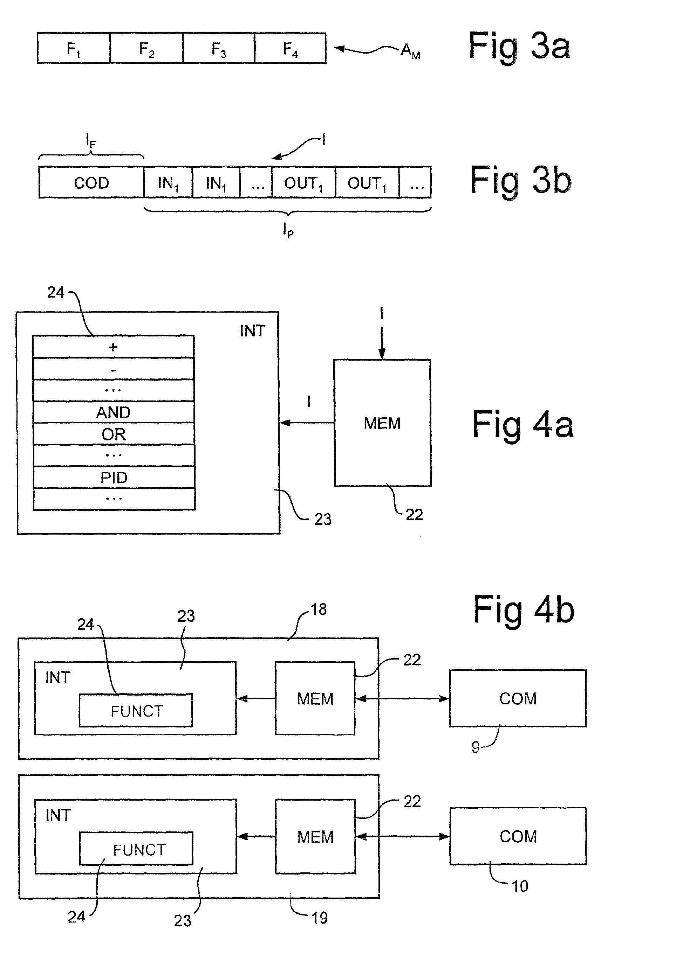

Emulation engine 15 is provided with a memory capacity and is configurable by structural configuration unit 3 and functional configuration unit 5. As previously mentioned, structural configuration unit 3 allows to define a virtual copy of the architecture of controller 50 to be emulated, while functional configuration unit 5 reproduces the functional features. As far as the physical structure is concerned, a generic controller normally comprises a plurality of processing boards and input/output devices organised in operating modules, which are in turn operatively grouped in nodes and in one or more loops. Furthermore, reciprocally interconnected functional blocks are defined within each operating module to make a predetermined control diagram (constants, logical operators, algebraic or transcendent operators, integrators, derivators, gains, delays, PID regulators, to list only some examples). Each block is defined by a respective machine address A_{M}, comprising four numeric fields, in F1:F2:F3:F4 format (figure 3a). More precisely, fields F1, F2, F3, correspond to the loop, the node and the operating module to which a certain block belongs; field F4 defines the address of the block in the operating module, which it belongs to. The logical and functional structure and the interconnections are defined by means of a set of instructions, which are assigned and loaded in operating modules. The instructions are defined in a functional block language. More specifically (figure 3b), in a functional block language, each instruction I comprises a functional portion IF and a parameter portion I_{P}. The functional portion contains a function identification code C_{F}, while parameter portion I_{P} contains addresses IN₁, IN₂, ... and addresses OUT₁, OUT₂, ... of blocks to which the inputs and outputs of the block defined by instruction I are respectively connected (the number of inputs and outputs is obviously variable according to the functions).

Structural configuration unit 3 allows to define an operating module structure M organised in nodes N and loops L (figure 2 shows a structure with one loop L and four nodes N, having four, two, three and five operating modules M, respectively). Each operating module M is identified by a respective machine address A_{M}, in F1:F2:F3:F4 format.

Functional configuration unit 5 allows to assign a respective set of instructions I to each operating module M. For this purpose, functional configuration unit 5 may be connected both to engineering station 11, through addressing device 17, and to controller 50 to be emulated, through communication port 5a. The connection to engineering station 11 allows a supervising technician to either manually load instructions I, or send predefined CFDP configuration data stored in engineering station 11. The connection to controller 50 through serial port 5a allows to fetch and transfer the current CFDA configuration data, i.e. the set of instructions I actually used by controller 50 itself, to emulation engine 15 (also function configuration unit 5 and emulation engine 15 are coupled through the addressing device 17). In this case, in practice, emulation engine 15 is directly configured by using instructions I forming the current CFDA configuration data and defining the functional structure of emulator 1 does not require the functional structure of controller 50 to be known beforehand (for example, when the configuration of controller 50 is modified after installation). The connection via serial port 5a may also be used in the reverse direction, to transfer configuration data from emulator 1 to controller 50. For example, configuration data may be separately generated, tested on emulator 1, possibly changed and then loaded in controller 50. Preferably, functional configuration unit 5 is equipped with a language translator, not shown here, which allows to translate configuration data generated in a different language in the functional block language of controller 50.

Operating modules M perform the control operations in the mode and at the speed with which the same operations are performed by controller 50.

With reference to figure 4a, each operating module M comprises a working memory 22, in which instructions I applicable to operating module M are loaded, and an interpreter 23, provided with a function table 24, which contains, in turn, an execution code for each type of instruction I available in the working memory 22. In use, instructions I are extracted from the working memory 22 and sent to interpreter 23 to be executed. In practice, interpreter 23 selects the corresponding code from the function table 24, on the basis of the function portion I_{F} of instruction I, and runs it using the parameters shown in the parameter portion I_{P}.

As shown in figure 4b, each of the I/O modules 18, 19 comprises a working memory 22 and an interpreter 23, essentially of the type defined in operating modules M. I/O modules I/O 18, 19 are configured to interact with the respective communication ports 9, 10 and their configuration can be changed by means of functional configuration unit 5.

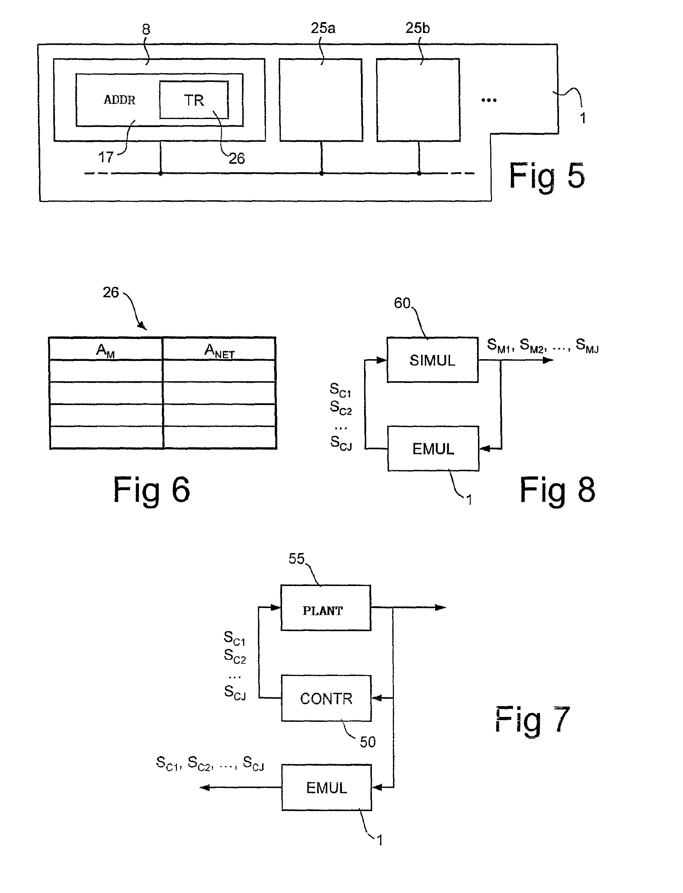

As previously mentioned, communication is essentially managed by addressing device 17, which uses machine addresses A_{M}. Operating modules M may however be directly connected to acquisition unit 6 and to driving unit 7 through data bus 20 to exchange measured high speed signals S_{I1}, ..., S_{IM} and critical control signals S_{C1}, ..., S_{CK}. Furthermore, if emulator 1 is implemented by means of further electronic computers 25a, 25b, ... connected in a network, in addition to computer 8 (as shown in figure 5), addressing device 17 also uses network addresses A_{NET}, for example IP addresses. In practice, addressing device 17 uses transcoding tables 26, of the type shown in figure 6, in which a respective network address A_{NET} is associated to the machine address A_{M} of each component of emulator 1 (e.g. to each block M). Network address A_{NET} is used to select the computer 25 on which the component identified by the corresponding machine address A_{M} resides.

Use of emulator 1 firstly requires the definition of an emulated architecture through the use of structural configuration unit 3 (possibly controlled by engineering station 11). Once the structure of operating modules N and their organisation in nodes N and loops L is defined, emulator 1 is functionally characterised by functional configuration unit 5. As previously explained, functional configuration unit 5 fetches the current CFDA configuration data from controller 50 through the serial port and transfers them to the operating modules M. Alternatively, emulator 1 is configured by driving functional configuration unit 5 through engineering station 11.

At the end of the configuration step, emulator 1 is connected to plant 55 (or to its simulator 60) and is activated. Therefore, operating modules M of emulation engine 15 run instructions I assigned to them, using data from (real or simulated) plant 55 as inputs. The operation of controller 50 is therefore exactly reproduced. Moreover, during the overall operating time of emulator 1, timer device 16 controls the execution speed of control operations so that the response of emulation unit 2 complies with the set cycle time T_{C}.

The connection may be performed in various ways. For example, emulator 1 may be connected so as to receive the measured signals S_{M1'} ..., S_{MJ}, in parallel with controller 50 (figure 7). In this case, since emulator 1 is configured to perform the same operations as controller 50, both should generate control signals S_{C1}, ..., S_{CK}. Therefore, a possible difference probably indicates malfunctioning of a hardware component of controller 50. The connection of emulator 1 to simulator 60 of plant 55 (figure 8) allows to analyse the behaviour of controller 50, to verify stability and strength, as well as to study the effect of possible changes. Emulator 1 may also be connected to a real plant 55 and replace controller 50.

The emulator according to the invention presents numerous advantages.

Firstly, emulator 1 reproduces essentially without approximation, the operation of controller 50 using very low cost machines (normal electronic computers) and without the need for specific dedicated components. The cost of emulator 1 is therefore incomparably lower than that of conventional simulators. Also, the physical structure may indeed be emulated by means of emulation engine 15 and not all the hardware components need to be replicated.

Furthermore, functional configuration of emulator 1 may also be made without knowing the configuration of controller 50 beforehand. Indeed, functional configuration unit 5 allows to establish a direct connection (via serial port) to download configuration data currently in use in controller 50. Therefore, emulator 1 may also be advantageously used to test previously installed controllers, regardless of whether their configuration was changed in time and however without the need for preliminary configuration data analysis (normally very complex). Besides, emulator 1 requires very limited resources (a personal computer, even a laptop, may be sufficient in many cases) and therefore may be easily installed and made operative very rapidly in any plant for generating electric energy and controller thereof.

Obviously, emulator 1 may be manually configured and is available even for purposes other than testing of operating controllers. In particular, emulator 1 may be used both during the design step of new controllers, for performing functional tests and for evaluating performances, and for training operating personnel (supervising technicians and plant operators; for this purpose, engineering station 11 and operator station 12 may be used) .

Emulator 1 is also capable of acquiring measuring signals and generating control signals directly in the formats used in real electric energy generating plant. Therefore, emulator 1 may also be used instead of a conventional controller.

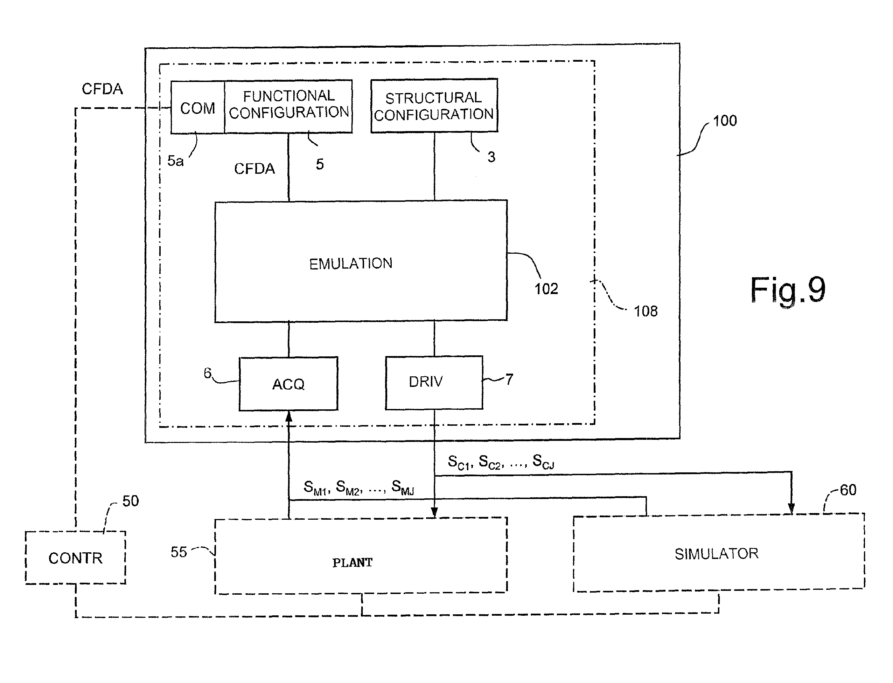

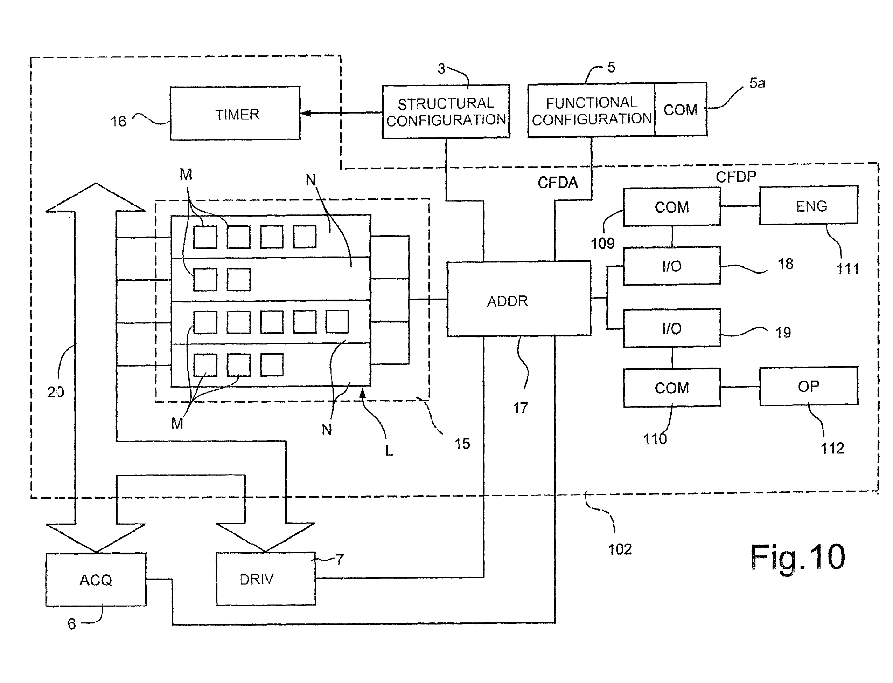

According to the embodiment of the invention shown in figures 9 and 10, in which parts equal to those already shown are indicated with the same reference numbers, an emulator 100 comprises an emulation unit 102, a structural configuration unit 3, a function configuration unit 5, an acquisition unit 6 and a driving unit 7, residing on the same computer 108 (shown with a dash-and-dotted line). As previously also explained with reference to figures 1 and 2, functional configuration unit 5 is connectable with controller 50 of plant 55 to exchange data. Furthermore, acquisition unit 6 and driving unit 7 are connectable to plant 55 controlled by controller 50 to be emulated (or, alternatively, to simulator 60 of plant 55) for respectively receiving measured signals S_{M1}, ..., S_{IM} and providing control signals S_{C1'} ..., S_{CK}.

As shown in figure 10, the emulation unit comprises two communication port modules 109, 110, an engineering station module 111, an operator station module 112, an emulation engine 15, a timer device 16, an addressing device 17 and I/O modules 18, 19. In this case, in practice, engineering station module 111 and operator station module 112, specifically pre-configured and working essentially as modules M in emulation engine 15, emulate a real engineering station and a real operator station, respectively. The connection of engineering station module 111 and operator station module 112 to the rest of emulator 100 is managed through communication port modules 109, 110, also emulated, and addressing device 17. Furthermore, addressing device 17 also envisages the connection to a screen and to conventional input devices (e.g. a keyboard and a pointer device, such as a mouse or a track-ball), which are not shown here.

It is finally apparent that changes and variations can be made to the described and illustrated emulator without departing from the scope of the present invention, as defined in the accompanying claims.

In particular, the emulator according to the invention may be used to emulate the controller of an industrial plant of any kind, which is configurable by means of a functional block language.

## Claims

1. An emulator of a controller of an industrial plant, comprising:
an emulation unit (2), comprising an emulation engine (15);
a structural configuration unit (3), for configuring the emulation engine (15) so as to define an architecture of a controller (50) of a plant (55), the architecture comprising a plurality of operative modules (M) organised in nodes (N) and at least one loop (L);
a functional configuration unit (5) for configuring the emulation engine (15) by means of sets of instructions (I) directly uploadable to the controller (50) and assigned to respective operating modules (M), so as to define controlling functions of the plant (55);
wherein at least one operating module (M) defined in the emulation engine (15) comprises an interpreter (23) for performing the instructions assigned to the operating module (M).

2. An emulator according to claim 1, wherein the functional configuration unit (5) comprises a communication port (5a) connectable to the controller (50) for fetching configuration data (CFDA) from the controller (50) and is coupled to the emulation engine (15) for configuring the emulation engine (15) according to the fetched configuration data (CFDA).

3. An emulator according to claim 1 or 2, wherein each operating module (M) defined in the emulation engine (15) comprises a working memory (22), to store instructions (I) assigned to the respective operating module (M), and an interpreter (23) connected to the working memory (22) to execute the instructions (I) available in the working memory (22).

4. An emulator according to claim 3, wherein the interpreter (23) of each operating module (M) comprises a function table (24), containing an execution code for each type of instruction (I) available in the respective working memory (22).

5. An emulator according to any of the preceding claims, comprising a programmable timer device (16), for controlling an execution speed of the emulation unit (2) according to a cycle time (T_{C}) set in the timer device (16) .

6. An emulator according to claim 5, wherein the structural configuration unit (3) is coupled to the timer device (16) for setting a cycle time (T_{C}).

7. An emulator according to any of the preceding claims, comprising an acquisition unit (6), connectable alternatively to the generating plant (55) and to a simulator (60) of the generating plant (55) for receiving measured signals (S_{M1'} ..., S_{MJ}) representing the respective controlled variables.

8. An emulator according to claim 7, wherein the acquisition unit (6) is connected to the emulation engine (15) to provide the measured signals (S_{M1}, ..., S_{MJ}).

9. An emulator according to any of the preceding claims, comprising a driving unit (7), alternatively connectable to the electric energy generating plant (55) and to a simulator (60) of the electric energy generating plant (55) for providing control signals (S_{C1}, ..., S_{CK}), representing the respective controlled variables.

10. An emulator according to claim 9, wherein the driving unit (7) is connected to the emulation engine (15) to receive the control signals (S_{C1'} ..., S_{CK}).

11. An emulator according to any of the preceding claims, comprising at least one engineering station (11) connected at least to the emulation unit (2) and to the functional configuration unit (5).

12. An emulator according to any of the preceding claims, comprising an operator station (12) connected at least to the emulation unit (2).
